# EUROPEAN PATENT APPLICATION

(11) **EP 1 398 164 A1**
(43) Date of publication of application: **17.03.2004**
(21) Application number: 02717110.7
(22) Date of filing: 11.04.2002
(51) Int. Cl.: B41M 5/00, C09D 11/00

(54) **INK-JET PRINTING**

(30) Priority: 12.06.2001 JP 2001176665
(71) Applicant: Kansai Paint Co., Ltd., Amagasaki-shi, Hyogo 661-8555 (JP)
(72) Inventor: YAMANOUCHI, Akihiko, Hiratsuka-shi, Kanagawa 259-1219 (JP); KAMIMORI, Isao, Hiratsuka-shi, Kanagawa 254-0018 (JP); YUKAWA, Yoshiyuki, Hiratsuka-shi, Kanagawa 254-0002 (JP)
(74) Representative: Albrecht, Thomas, Dr.
(86) International application number: PCT/JP2002/003596
(87) International publication number: WO 2002/100652

(57) **Abstract**

The present invention provides a method for producing an ink jet printed matter, characterized by forming a white color base coating film layer (I) on a base material surface using a white color base coating material which contains silica fine particles having an oil absorption of 10 to 400 ml/100 g and which has a pigment volume concentration of 5 to 90 %, then forming a printed layer (II) thereon by an ink jet system using a water based ink composition and further forming a clear coat layer (III) thereon using a clear coating material. According to the above method, a printed matter which has a preferred pattern and is excellent in a weatherability can be obtained.

## Description

### Technical Field

The present invention relates to ink jet printing, more specifically to a method for producing an ink jet printed matter which is suited to outdoor uses such as building wall surfaces, outdoor signboards, traffic signs and car bodies and which has preferred patterns and is excellent in a weatherability, and an ink jet printed matter obtained by the same.

### Background Art

Printers operated by an ink jet system have so far widely been spread as printing equipments for computers. In this ink jet printer, images and data are drawn on print paper by discharging three primary colors of red, blue and yellow and a black color respectively from nozzles according to the color tones of the respective picture elements of images and data to adhere them on print paper in a dot form and put them one over another on the print paper to thereby reproduce the color tones of the picture elements and further by driving the nozzles to right and left directions and delivering the print paper to a vertical direction.

In recent years, objects drawn by the ink jet system not only are print papers but also have been expanded to building wall surfaces, outdoor signboards, traffic signs and car bodies, and inks used for ink jet are required to be improved in a water resistance, a weatherability and a light fastness.

Accordingly, a color material of an ink for ink jet is being switched from a dye over to a pigment, but a water based pigment ink is still unsatisfactory in a print density of a printed image and involves the problem that it causes clogging at the head when it is used as an ink for ink jet. Accordingly, a rise in a wetting property and a dispersion stability of a pigment is desired.

On the other hand, a method in which a plastic film containing a UV absorber is laminated and adhered on a printed layer is employed as a method for providing a matter printed by an ink jet system with functions such as a weatherability, a scratching resistance and an acid resistance. However, this method has the problems that a great number of steps is required for laminate working and that the functions described above are not sufficiently provided.

Intensive investigations repeated by the present inventors in order to solve the problems described above have resulted in finding that a printed layer which is excellent in a color developing property and a finish appearance can be formed by forming a base coating film layer on a base material surface using a specific white color base coating material, then forming a printed layer thereon by an ink jet system using a water based ink composition and further forming a clear coat layer thereon using a clear coating material and that a printed matter which is excellent in a weatherability, a scratching resistance and an acid resistance can be obtained, and they have come to complete the present invention.

### Disclosure of the Invention

Thus, the present invention provides a method for producing an ink jet printed matter, characterized by forming a white color base coating film layer (I) on a base material surface using a white color base coating material which contains silica fine particles having an oil absorption of 10 to 400 ml/100 g and which has a pigment volume concentration of 5 to 90 %, then forming a printed layer (II) thereon by an ink jet system using a water based ink composition and further forming a clear coat layer (III) thereon using a clear coating material.

Further, the present invention provides an ink jet printed matter obtained by the method described above.

The method for producing an ink jet printed matter according to the present invention shall be explained below in further details.

### Detailed Description of the Invention

### Base material:

The base material on which a printed matter can be formed according to the method of the present invention shall not specifically be restricted, and it includes, for example, base materials comprising materials such as paper, wood, metal and plastics, base materials such as mortar and slate and those obtained by subjecting these base materials to surface treatment and/or coating film formation. Further, these base materials can be used, if necessary, in the form of an adhesive sheet prepared by providing an adhesive layer on a face opposite to a face on which the printed layer is formed.

### Formation of the white color base coating film layer (I):

According to the present invention, the white color base coating film layer (I) is formed prior to forming the printed layer on the surface of the base material described above on the base material surface using the white color base coating material which contains silica fine particles having an oil absorption of 10 to 400 ml/100 g and which has a pigment volume concentration of 5 to 90 %.

The coating film layer of the white color base coating material described above plays a role as a receiving layer for an ink so that feathering of the ink in the printed layer which is an upper layer is not caused, and it contains silica fine particles having an oil absorption falling in a range of 10 to 400 ml/100 g, preferably 150 to 350 ml/100 g and more preferably 200 to 320 ml/100 g. In the present specification, the "oil absorption" is a value measured according to a method described in JIS K5101 21 (1991). Particles having an average particle diameter falling in a range of usually 100 nm to 10,000 nm, particularly 500 nm to 7,000 nm are suited for the above silica fine particles.

A content of such silica fine particles in the above white color base coating material can be changed according to the kind of the water based ink composition coated thereon. In general, it can fall in a range of 3 to 40 % by weight, preferably 3 to 30 % by weight and more preferably 5 to 25 % by weight.

Also, the white color base coating material used for forming the white color base coating film layer (I) can have a pigment volume concentration falling in a range of 5 to 90 %, preferably 10 to 55 % and more preferably 15 to 45 %. In the present specification, the "pigment volume concentration" (hereinafter abbreviated as "PVC") is a volume proportion of the pigment component based on the total solid matters of the resin component and the pigment component. In this case, the "pigment component" is a general term of a chromatic or achromatic color pigment, a bright pigment such as metal flake, an extender pigment including silica fine particles and a rust preventive pigment. If the white color base coating material has a PVC of less than 5 %, a coating film formed from it is notably reduced in a base masking property. On the other hand, if it exceeds 90 %, a viscosity of the coating material grows high, and it is usually difficult to form a smooth coating film.

The white color base coating material described above having any type such as an organic solvent type, a water based type and a powder type can be used as long as it contains a white pigment and can form a white coating film. Capable of being used as the base resin component for the above coating material are, for example, various resins such as acryl resins, polyester resins, alkyd resins, urethane resins and epoxy resins which can have, if necessary, a functional group such as a hydroxyl group, a carboxyl group and an amino group. They can be used in combination with a cross-linking agent such as a polyisocyanate compound and an amino resin which may suitably be blocked. The above white color base coating material may be either type of a cold setting type and a thermosetting type or may be a type which is cured by an active ray such as a UV ray and an electron beam. In particular, suited are a coating material of a urethane setting type containing a combination of polyacrylpolyol or polyesterpolyol and a polyisocyanate compound which may be blocked as a resin component and a coating material of a UV ray setting type containing a UV ray setting acryl resin as a resin component.

A white pigment which can be blended with these coating materials includes, for example, titanium oxide, zinc white and lead white which are usually used for a white color base coating material, and coating material additives such as extender pigments and aggregates including barium sulfate, calcium sulfate, magnesium silicate hydrate, talc, mica, clay and baryte can be used in combination as long as a white color of the coating film formed is not substantially influenced.

The white color base coating material described above accounts preferably for at least 55 % by weight, particularly 70 to 95 % by weight based on the total weight of the pigment component blended.

The white color base coating material described above is coated on the surface of the base material described above by a conventionally known method such as air spray, airless spray and an electrostatic rotary atomizing type coating method and can be, if necessary, dried to touch, semi-cured or heat-cured by drying in air and blowing hot air, whereby the white color base coating film layer (I) can be formed. Usually, the white color base coating film layer (I) can have a thickness falling in a range of about 5 to about 50 µm, preferably about 10 to about 30 µm in terms of a dried film thickness.

### Formation of the printed layer (II):

According to the present invention, the printed layer (II) is formed on the white color base coating film layer (I) formed in the manner described above by an ink jet method using a water based ink composition.

Any ones can be used as the water based ink composition without having specific restrictions as long as characters, graphics, patterns, signs or combinations thereof can be printed. In particular, suited from the viewpoints of a wetting property, a dispersion stability and a color developability of the pigment is a water based ink composition comprising a resin for dispersing a pigment which is a copolymer of a polymerizable unsaturated monomer (A) having at least one ionic functional group selected from a tertiary amino group, a quaternary ammonium group and a sulfonic acid group, a nonionic polymerizable unsaturated monomer (B) having a polyoxyalkylene chain and the other ethylenically unsaturated monomer (C), a pigment and a water based medium.

This suited water based ink composition shall be explained below in further details.

### Resin for dispersing a pigment

The resin for dispersing a pigment added to the water based ink composition suitably used for forming the printed layer (II) is a copolymer of the ionic functional group-containing polymerizable unsaturated monomer (A), the nonionic polymerizable unsaturated monomer (B) and the other ethylenically unsaturated monomer (C) each described below.

### Polymerizable unsaturated monomer (A) having an ionic functional group:

The monomer (A) is a monomer component for introducing a specific ionic functional group into the resin for dispersing a pigment, and used is a polymerizable unsaturated monomer having at least one ionic functional group selected from a tertiary amino group, a quaternary ammonium group and a sulfonic acid group.

The specific examples of the monomer (A) include, for example,
tertiary amino group-containing polymerizable unsaturated monomers including N,N-dialkylaminoalkyl (meth)acrylate such as N,N-dimethylaminoethyl (meth)acrylate, N,N-diethylaminoethyl (meth)acrylate, N,N-dimethylaminopropyl (meth)acrylate, N,N-di-t-butylaminoethyl (meth)acrylate and N,N-dimethylaminobutyl (meth)acrylate; and N,N-dialkylaminoalkyl (meth)acrylamide such as N,N-dimethylaminoethyl (meth)acrylamide, N,N-diethylaminoethyl (meth)acrylamide and N,N-dimethylaminopropyl (meth)acrylamide,
quaternary ammonium group-containing polymerizable unsaturated monomers including
(meth)acryloyloxyalkyltrialkylammonium salts such as 2-(methacryloyloxy)ethyltrimethylammonium chloride, 2-(methacryloyloxy)ethyltrimethylammonium bromide and 2-(methacryloyloxy)ethyltrimethylammonium dimetylphosphate; (meth)acryloylaminoalkyltrialkylammonium salts such as methacryloylaminopropyltrimethylammonium chloride and methacryloylaminopropyltrimethylammonium bromide; tetraalkylammonium (meth)acrylate such as tetrabutylammonium (meth)acrylate; and trialkylbenzylammonium (meth)acrylate such as trimethylbenzylammonium (meth)acrylate, and
sulfonic acid group-containing polymerizable unsaturated monomers including (meth)acrylamide-alkanesulfonic acids such as 2-acrylamide-2-methylpropanesulfonic acid; and sulfoalkyl (meth)acrylates such as 2-sulfoethyl (meth)acrylate. These monomers can be used alone or in combination of two or more kinds thereof. Among these monomers, particularly suited as the polymerizable unsaturated monomer (A) are N,N-dimethylaminoethyl (meth)acrylate, N,N-diethylaminoethyl (meth)acrylate, 2-(methacryloyloxy)ethyltrimethylammonium chloride and 2-acrylamide-2-methylpropanesulfonic acid.

Also, if the quaternary ammonium group-containing polymerizable unsaturated monomer described above is used in combination with the tertiary amino group-containing polymerizable unsaturated monomer, particularly 2-(methacryloyloxy)ethyltrimethylammonium chloride is used in combination with N,N-dimethylaminoethyl (meth)acrylate and/or N,N-diethylaminoethyl (meth)acrylate, the range of the pigment to which the resin for dispersing the pigment according to the present invention can be applied can be expanded.

A use proportion of the quaternary ammonium group-containing polymerizable unsaturated monomer (a) to the tertiary amino group-containing polymerizable unsaturated monomer (b) in using in combination falls suitably in a range of usually 10/1 to 1/20, particularly 5/1 to 1/10 in terms of a weight ratio of (a)/(b). When the tertiary amino group-containing polymerizable unsaturated monomer and/or the quaternary ammonium group-containing polymerizable unsaturated monomer are used as the monomer (A), the tertiary amino group and/or the quaternary ammonium group which are introduced into the resin effectively work particularly on a dispersibility of an acid pigment and a neutral pigment. On the other hand, when the sulfonic acid group-containing polymerizable unsaturated monomer is used as the monomer (A), the sulfonic acid group which is introduced into the resin effectively works particularly on a dispersibility of a basic pigment.

### Nonionic polymerizable unsaturated monomer (B) having a polyoxyalkylene chain:

The monomer (B) is a monomer component for providing the copolymer formed with a hydrophilicity, and it is a monomer having a polyoxyalkylene chain and a polymerizable unsaturated group in a molecule. Capable of being given as the polyoxyalkylene chain described above are a polyoxyethylene chain, a polyoxypropylene chain and a blocked chain of polyoxyethylene with polyoxypropylene.

The polyoxyalkylene chain has suitably a molecular weight falling in a range of 200 to 3,000, particularly 300 to 2,500.

Capable of being given as the representative example of the monomer (B) is a compound represented by, for example, the following formula (1): 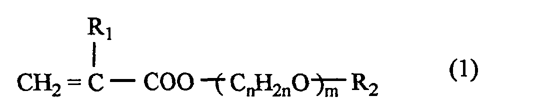 wherein R₁ represents a hydrogen atom or methyl; R₂ represents a hydrogen atom or an alkyl group having 1 to 4 carbon atoms; m represents an integer of 4 to 60, preferably 6 to 50; n represents an integer of 2 to 3, preferably 2; and m units of an oxyalkylene unit (CₙH₂ₙO) may be the same as or different from each other.

Capable of being given as the specific example of the monomer (B) are, for example, tetraethylene glycol (meth)acrylate, methoxytetraethylene glycol (meth)acrylate, ethoxytetraethylene glycol (meth)acrylate, n-butoxytetraethylene glycol (meth)acrylate, tetrapropylene glycol (meth)acrylate, methoxytetrapropylene glycol (meth)acrylate, ethoxytetrapropylene glycol (meth)acrylate, n-butoxytetrapropylene glycol (meth)acrylate, polyethylene glycol (meth)acrylate, polypropylene glycol (meth)acrylate, methoxypolyethylene glycol (meth)acrylate and ethoxypolyethylene glycol (meth)acrylate. Among them, polyethylene glycol (meth)acrylate and polypropylene glycol (meth)acrylate are particularly suited.

They each can be used alone or in combination of two or more kinds thereof.

### Other ethylenically unsaturated monomer (C):

The other ethylenically unsaturated monomer (C) is a polymerizable unsaturated monomer which can be copolymerized with the monomer (A) and the monomer (B) each described above and which is different fro these monomer (A) and monomer (B), and it is suitably selected and used according to characteristics desired to the resin for dispersing a pigment.

Capable of being given as the specific example of the monomer (C) are, for example, C₁ to C₂₄ linear or cyclic alkyl (meth)acrylate monomers such as methyl (meth)acrylate, ethyl (meth)acrylate, n-propyl (meth)acrylate, isopropyl (meth)acrylate, n-butyl (meth)acrylate, isobutyl (meth)acrylate, tert-butyl (meth)acrylate, 2-ethylhexyl (meth)acrylate, n-octyl (meth)acrylate, lauryl (meth)acrylate, stearyl (meth)acrylate, cyclohexyl (meth)acrylate, isobornyl (meth)acrylate and tridecyl (meth)acrylate; hydroxyl group-containing polymerizable unsaturated monomers (typically, hydroxyalkyl (meth)acrylate monomers) such as 2-hydroxyethyl (meth)acrylate, hydroxypropyl (meth)acrylate and hydroxybutyl (meth)acrylate; carboxyl group-containing polymerizable unsaturated monomers such as methacrylic acid and acrylic acid; acrylamide and methacrylamide; oxetane ring-containing (meth)acrylates such as 3-ethyl-3-(meth)acryloyloxymethyloxetane, 3-methyl-3-(meth)acryloyloxymethyloxetane and 3-butyl-3-(meth)acryloyloxymethyloxetane; aromatic vinyl compounds such as styrene, α-methylstyrene and vinyltoluene; (meth)acrylonitrile and vinyl acetate. These polymerizable unsaturated monomers can be used alone or in combination of two or more kinds thereof.

The monomer (C) described above contains preferably a hydroxyl group-containing polymerizable unsaturated monomer at least as a part of the component thereof from the viewpoints of easiness in wetting, onto a face for printing, of the water based ink composition prepared using the copolymer formed from the monomer (A), the monomer (B) and the monomer (C) as the resin for dispersing the pigment, easiness in putting the ink thereon and a reactivity thereof with a curing agent component.

Capable of being given as the specific example of the hydroxyl group-containing polymerizable unsaturated monomer are monoesterified products of polyhydric alcohols with (meth)acrylic acid such as 2-hydroxyethyl (meth)acrylate, hydroxypropyl (meth)acrylate, 2,3-dihydroxybutyl (meth)acrylate, 4-hydroxybutyl (meth)acrylate and polyethylene glycol mono(meth)acrylate each described above; and compounds obtained by subjecting the foregoing monoesterified products of polyhydric alcohols with (meth)acrylic acid to ring-opening polymerization with ε-caprolactone. Among them, suited from the viewpoint of the activity are 4-hydroxybutyl (meth)acrylate, polyethylene glycol mono(meth)acrylate (other than the monomer (B) described above) and the compounds obtained by subjecting the monoesterified products of polyhydric alcohols with (meth)acrylic acid to ring-opening polymerization with ε-caprolactone. The compounds described above which are given as the examples each can be used alone or in combination of two or more kinds thereof. The hydroxyl group-containing polymerizable unsaturated monomer is preferably used in a range of 3 to 30 % by weight, preferably 5 to 25 % by weight based on the total amount of the monomers (A), (B) and (C).

Further, in order to secure a water dispersibility, a carboxyl group-containing polymerizable unsaturated monomer in addition to the monomer (B) described above having hydrophilicity can be used, if necessary, as at least a part of the other ethylenically unsaturated monomer (C). The resin for dispersing a pigment obtained using this carboxyl group-containing polymerizable unsaturated monomer is not preferably used in combination with a basic neutralizing agent.

Further, a UV ray absorbing polymerizable unsaturated monomer and/or UV ray stabilizing polymerizable unsaturated monomer (D) which shall be described below can be used, if necessary, as at least a part of the monomer (C) described above for the purpose of elevating a weatherability of the printed layer (II) formed.

### UV absorbing polymerizable unsaturated monomer and/or UV stabilizing polymerizable unsaturated monomer (D):

The monomer (D) is a monomer component for enhancing a weatherability of the formed copolymer by providing the copolymer with a UV ray absorbability and/or a UV ray stability.

The UV ray-absorbing polymerizable unsaturated monomer used for such purpose includes, for example, addition reaction products of hydroxybenzophenones such as 2,4-dihydroxybenzophenone and 2,2',4-trihydroxybenzophenone with glycidyl (meth)acrylate, for example, 2-hydroxy-4-(3-methacryloyloxy-2-hydroxypropoxy)benzophenone, 2-hydroxy-4-(3-acryloyloxy-2-hydroxypropoxy)benzophenone, 2,2'-dihydroxy-4-(3-methacryloyloxy-2-hydroxypropoxy)benzophenone and 2,2'-dihydroxy-4-(3-acryloyloxy-2-hydroxypropoxy)benzophenone; and 2-(2'-hydroxy-5'-methacryloyoxyethylphenyl)-2H-benzotriazole. Among them, particularly suited is a compound having a (2'-hydroxylphenyl)-benzotriazole structure and a (meth)acryloyl group, to be specific, 2-(2'-hydroxy-5'-methacryloyoxyethylphenyl)-2H-benzotriazole shown above as the example.

The UV ray-stabilizing polymerizable unsaturated monomer includes, for example, 4-(meth)acryloyloxy-1,2,2,6,6-pentamethylpiperidine, 4-(meth)acryloyloxy-2,2,6,6-tetramethylpiperidine, 4-cyano-4-(meth)acryloyloxy-2,2,6,6-tetramethylpiperidine, 1-(meth)acryloyl-4-(meth)acryloylamino-2,2,6,6-tetramethylpiperidine, 1-(meth)acryloyl-4-cyano-4-(meth)acryloylamino-2,2,6,6-tetramethylpiperidine, 4-crotonoyloxy-2,2,6,6-tetramethylpiperidine, 4-crotonoylamino-2,2,6,6-tetramethylpiperidine and 1-crotonoyl-4-crotonoyloxy-2,2,6,6-tetramethylpiperidine. Among them, 4-(meth)acryloyloxy-1,2,2,6,6-pentamethylpiperidine is particularly suited.

These UV ray-absorbing polymerizable unsaturated monomers and UV ray-stabilizing polymerizable unsaturated monomers are suitably selected depending on the pigment to be dispersed, and only one of them or both in combination can be used.

The resin for dispersing a pigment is obtained by copolymerizing the polymerizable unsaturated monomer (A) having an ionic functional group, the nonionic polymerizable unsaturated monomer (B) and the other ethylenically unsaturated monomer (C) each described above. A use proportion of the monomers (A), (B) and (C) in the copolymerization shall not strictly be restricted and can be changed according to physical properties desired to the copolymer formed. In general, it can fall in the following ranges based on the total amount of the monomers (A), (B) and (C):
- monomer (A):: 0.5 to 40 % by weight, preferably 1 to 35 % by weight and more preferably 1.5 to 30 % by weight,
- monomer (B):: 5 to 40 % by weight, preferably 7 to 35 % by weight and more preferably 10 to 25 % by weight and
- monomer (C):: 20 to 94.5 % by weight, preferably 30 to 92 % by weight and more preferably 45 to 88.5 % by weight.

In particular, when the UV ray-absorbing polymerizable unsaturated monomer and/or UV ray-stabilizing polymerizable unsaturated monomer (D) is used as at least a part of the monomer (C), a use proportion of the monomers (A), (B), (C) and (D) can usually fall in the following ranges based on the total amount of the monomers (A), (B), (C) and (D):
- monomer (A):: 0.5 to 30 % by weight, preferably 1 to 20 % by weight and more preferably 1.5 to 15 % by weight,
- monomer (B):: 5 to 40 % by weight, preferably 10 to 30 % by weight and more preferably 15 to 25 % by weight,
- monomer (C):: 25 to 94.4 % by weight, preferably 47 to 88.5 % by weight and more preferably 57.5 to 82.5 % by weight
and
- monomer (D):: 0.1 to 5 % by weight, preferably 0.5 to 3 % by weight and more preferably 1 to 2.5 % by weight.

The monomers (A), (B) and (C) can be copolymerized by a conventionally known method, for example, a solution polymerization method in an organic solvent and an emulsion polymerization method in water. Among them, the solution polymerization method is suited. Capable of being given as a copolymerization method carried out by the solution polymerization method is, for example, a method in which a mixture of the monomers (A), (B) and (C) each described above and a radical polymerization initiator is dissolved or dispersed in an organic solvent and heated usually at a temperature of about 80 to about 200°C for 1 to 10 hours while stirring to thereby copolymerize them.

Capable of being given as the organic solvent which can be used in the copolymerization are, for example, hydrocarbon base solvents such as heptane, toluene, xylene, octane and mineral spirits; ester base solvents such as ethyl acetate, n-butyl acetate, isobutyl acetate, ethylene glycol monomethyl ether acetate and diethylene glycol monobutyl ether acetate; ketone base solvents such as methyl ethyl ketone, methyl isobutyl ketone, diisobutyl ketone and cyclohexanone; alcohol base solvents such as methanol, ethanol, isopropanol, n-butanol, sec-butanol and isobutanol; ether base solvents such as n-butyl ether, dioxane, ethylene glycol monomethyl ether and ethylene glycol monoethyl ether; and aromatic petroleum base solvents such as Swazol 310, Swazol 1000 and Swazol 1500 each manufactured by Cosmo Petroleum Co., Ltd. These organic solvents can be used alone or in combination of two or more kinds thereof. In the polymerization reaction, the organic solvent described above can be used in a proportion of usually 400 parts by weight or less per 100 parts by weight of the total amount of the monomer components.

Capable of being given as the radical polymerization initiator described above are, for example, ketone peroxides such as cyclohexanone peroxide, 3,3,5-trimethylcyclohexanone peroxide and methylcyclohexanone peroxide; peroxyketals such as 1,1-bis(tert-butylperoxy)-3,3,5-trimethylcyclohexanone, 1,1-bis(tert-butylperoxy)cyclohexanone and n-butyl-4,4-bis(tert-butylperoxy)valerate; hydroperoxides such as cumene hydroperoxide and 2,5-dimethylhexane-2,5-dihydroperoxide; dialkylperoxides such as 1,3-bis(tert-butylperoxy-m-isopropyl)benzene, 2,5-dimethyl-2,5-di(tert-butylperoxy)hexane, diisopropylbenzene peroxide and tert-butylcumyl peroxide; diacylperoxides such as decanoyl peroxide, lauroyl peroxide, benzoyl peroxide and 2,4-dichlorobenzoyl peroxide; peroxycarbonates such as bis(tert-butylcyclohexyl) peroxydicarbonate; organic peroxide base polymerization initiators including peroxyesters such as tert-butylperoxybenzoate, 2,5-dimethylhexane-2,5-di(benzoylperoxy)hexane; and azo base polymerization initiators such as 2,2'-azobisisobutyronitrile, 1,1-azobis(cyclohexane-1-carbonitrile), azocumene-2,2'-azobismethylvaleronitrile and 4,4'-azobis(4-canovaleric acid). A use amount of these radical polymerization initiators shall not specifically be restricted and falls preferably in a range of usually 0.1 to 15 parts by weight, particularly 0.3 to 10 parts by weight per 100 parts by weight of the total of the polymerizable monomers.

In the polymerization reaction described above, the addition method of the monomer components and the polymerization initiator shall not specifically be restricted. The polymerization initiator is preferably dropwise added dividing into several times at the initial stage of the polymerization through the latter stage thereof rather than charging in one lot at the initial stage of the polymerization from the viewpoints of temperature control in the polymerization reaction and an inhibition in the production of unfavorable crosslinked products such as gelatinized matters.

A molecular weight of the copolymer thus obtained shall not specifically be restricted and falls preferably in a range of usually 500 to 100,000, particularly 1,000 to 70,000 and further particularly 3,000 to 50,000 in terms of a weight average molecular weight from the viewpoints of a water dispersion stability, a pigment dispersibility, a viscosity, VOC and a color number (tinting degree) of the resin.

The resin for dispersing a pigment comprising the copolymer produced in the manner described above is used for preparing a water based pigment dispersion, and therefore it has to be a resin which can allow a wetting property onto the pigment to stand together with a dispersion stability of the pigment. The monomer (A) component constituting the resin for dispersing a pigment according to the present invention can elevate the absorption of the resin for dispersing the pigment onto the pigment, and it can advantageously work on both aspects of a rise in a wetting property of the pigment and an elevation in a dispersion stability of the resin. The monomer (B) component constituting the resin for dispersing a pigment according to the present invention contributes to a rise in a dissolving property of the resin for dispersing a pigment into a continuous phase (water based medium), and it can advantageously work particularly on an elevation in a dispersion stability of the resin for dispersing a pigment. Further, the copolymerization carried out using a tertiary amino group-containing polymerizable unsaturated monomer as at least a part of the monomer (A) makes it possible to prepare the resin for dispersing a pigment having a markedly improved dispersion power of particularly a black pigment (carbon black) which is supposed to be a scarcely dispersible pigment.

The water based ink composition used for forming the printed layer (II) can be produced by blending the resin for dispersing a pigment (hereinafter referred to as a resin (a) for dispersing a pigment) produced in the manner described above with the pigment, the water based medium and, if necessary, the other resin for dispersing a pigment (hereinafter referred to as a resin (b) for dispersing a pigment), a dispersion auxiliary, a basic neutralizing agent, other additives, for example, additives such as a water soluble resin, a thickener, a flow controlling agent, a film forming auxiliary, a surfactant, a pH controlling agent, an antimildew agent, an antioxidant, a UV absorber, a UV stabilizer and a chelating agent, and dyes.

The pigment described above includes, for example, bright pigments such as aluminum powder, copper powder, nickel powder, stainless powder, chromium powder, mica-like iron oxide, titanium oxide-covered mica powder, iron oxide-covered mica powder and bright graphite; Pink EB, organic red pigments of an azo base and a quinacridone base, organic blue pigments such as cyanine blue and cyanine green, organic yellow pigments of a benzoimidazolone base, an isoindoline base and a quinophthalone base; and inorganic color pigments such as titanium white, titanium yellow, red iron oxide, carbon black, chrome yellow, iron oxide and various baked pigments. Further, extender pigments may be included therein. These pigments may be subjected to conventionally known surface treatment, for example, acid-base treatment, coupling agent treatment, plasma treatment and oxidation/reduction treatment.

Among them, the specific examples of the pigments used for inks for ink jet include, for example, black pigments such as Raven 7000, Raven 5750, Raven 5250, Raven 5000 ULTRA II, Raven 3500, Raven 2000, Raven 1500, Raven 1250, Raven 1200, Raven 1190 ULTRA II, Raven 1170, Raven 1255, Raven 1080 and Raven 1060 (all manufactured by Columbian Carbon Co., Ltd.), Regal 1400R, Regal 1330R, Regal 1660R, Mogul L, Black Pearls L, Monarch 700, Monarch 800, Monarch 880, Monarch 900, Monarch 1000, Monarch 1100, Monarch 1300 and Monarch 1400 (all manufactured by Cabot Co.), Color Black FW1, Color Black FW2, Color Black FW2V, Color Black 18, Color Black FW200, Color Black S150, Color Black S160, Color Black S170, Printex 35, Printex U, Printex V, Printex 140U, Printex 140V, Special Black 6, Special Black 5, Special Black 4A and Special Black 4 (all manufactured by Degussa Co.), No. 25, No. 33, No. 40, No. 47, No. 52, No. 900, No. 2300, MCF-88, MA600, MA7, MA8 and MA100 (all manufactured by Mitsubishi Chemical Corporation.); cyan color pigments such as C. I. Pigment Blue-1, C. I. Pigment Blue-2, C. I. Pigment Blue-3, C. I. Pigment Blue-15, Pigment Blue-15 : 1, Pigment Blue-15 : 3, C. I. Pigment Blue-15 : 34, C. I. Pigment Blue-16, C. I. Pigment Blue-22 and C. I. Pigment Blue-60; magenta color pigments such as C. I. Pigment Red-5, C. I. Pigment Red-7, C. I. Pigment Red-12, C. I. Pigment Red-48, C. I. Pigment Red-48 : 1, C. I. Pigment Red-57, C. I. Pigment Red-112, C. I. Pigment Red-122, C. I. Pigment Red-123, C. I. Pigment Red-146, C. I. Pigment Red-168, C. I. Pigment Red-184 and C. I. Pigment Red-202; and yellow pigments such as C. I. Pigment Yellow-1, C. I. Pigment Yellow-2, C. I. Pigment Yellow-3, C. I. Pigment Yellow-12, C. I. Pigment Yellow-13, C. I. Pigment Yellow-14, C. I. Pigment Yellow-16, C. I. Pigment Yellow-17, C. I. Pigment Yellow-73, C. I. Pigment Yellow-74, C. I. Pigment Yellow-75, C. I. Pigment Yellow-83, C. I. Pigment Yellow-93, C. I. Pigment Yellow-95, C. I. Pigment Yellow-97, C. I. Pigment Yellow-98, C. I. Pigment Yellow-114, C. I. Pigment Yellow-128, C. I. Pigment Yellow-129, C. I. Pigment Yellow-151 and C. I. Pigment Yellow-154. They are merely examples, and the pigments used for inks for ink jet shall not be restricted only to them.

A blending proportion of these pigments shall not specifically be restricted and preferably falls in a range of 10 to 3,000 parts by weight, particularly 15 to 2,000 parts by weight and further particularly 15 to 1,500 parts by weight per100 parts by weight of the resin (a) for dispersing a pigment from the viewpoints of a dispersibility and a dispersion stability of the pigment and a tinting power of the resulting pigment dispersion.

Capable of being given as the water based medium is water or a water·organic solvent mixed solution prepared by dissolving an organic solvent such as a water soluble organic solvent in water. The organic solvent used in this case includes, for example, water soluble organic solvents such as methyl alcohol, ethyl alcohol, isopropyl alcohol, propylene glycol, butyl cellosolve, propylene glycol monomethyl ether and 3-methyl-3-methoxybutanol; and scarcely soluble or insoluble organic solvents such as xylene, toluene, cyclohexanone, hexane and pentane. The above organic solvents can be used alone or in a mixture of two or more kinds thereof. The water insoluble organic solvents can be used as well in a small amount in combination with the water soluble organic solvents. A mixing proportion of water to the organic solvent shall not specifically be restricted, and a content of the organic solvent is preferably 50 % by weight or less, particularly 35 % by weight or less based on the mixed solution. A blending proportion of the water based medium shall not specifically be restricted and preferably falls in a range of 50 to 5,000 parts by weight, particularly 100 to 3,000 parts by weight and further particularly 100 to 2,000 parts by weight per 100 parts by weight of the resin (a) for dispersing a pigment from the viewpoints of the viscosity in dispersing the pigment, the pigment dispersibility, the dispersion stability and the production efficiency.

Capable of being given as the other resin (b) for dispersing a pigment which is used if necessary are, for example, acryl resins obtained by copolymerizing carboxyl group-containing polymerizable unsaturated monomers such as (meth)acrylic acid, hydroxyl group-containing polymerizable unsaturated monomers such as 2-hydroxyethyl (meth)acrylate and the other polymerizable unsaturated monomers in the presence of a radical polymerization initiator. Preferred as the above acryl resins are resins having a weight average molecular weight falling in a range of about 2,000 to 150,000, particularly 5,000 to 100,000, an acid value falling in a range of 5 to 150, particularly 15 to 100 and a hydroxyl value falling in a range of 10 to 160, particularly 30 to 120. Also, the other resin for dispersing a pigment includes, for example, polyester resins obtained by condensation reaction of polyhydric alcohols such as ethylene glycol, butylene glycol, 1,6-hexanediol, trimethylolpropane and pentaerythritol with polyvalent carboxylic acid components such as adipic acid, isophthalic acid, terephthalic acid, phthalic anhydride, hexahydrophthalic anhydride and trimellitic anhydride. Preferred as the above polyester resin are resins having a weight average molecular weight falling in a range of about 1,000 to 100,000, particularly 1,500 to 70,000, an acid value falling in a range of 5 to 150, particularly 15 to 100 and a hydroxyl value falling in a range of 10 to 160, particularly 30 to 120.

In a process for preparing the water based ink composition, usually, the pigment and the resin (a) for dispersing a pigment are dispersed in the water based medium, and then the dispersion is diluted with the other resin (b) for dispersing a pigment, whereby the stability in preparing the ink and the storage stability over a long period of time are obtained.

A use proportion (solid matter) of the resin (a) for dispersing a pigment to the other resin (b) for dispersing a pigment falls suitably in a range of 5 to 300 parts by weight, particularly 20 to 150 parts by weight for the resin (b) per 100 parts by weight of the resin (a).

The dispersion auxiliary used if necessary includes, for example, Disperbyk 184 and ditto 190 manufactured by BYK·Chemie Co., Ltd, and the other additives include a defoaming agent, a preservative, a rust preventive and a plasticizer. A blending amount thereof is preferably 50 parts by weight or less per 100 parts by weight of the resin for dispersing a pigment considering a dispersibility of the pigment, a stability of the paste, the letdown stability and the coating film performance.

The defoaming agent described above includes, to be specific, "BYK-019", "BYK-021", "BYK-023", "BYK-024", "BYK-025" and "BYK-028" (all manufactured by BYK-Chemie Co., Ltd., water base silicon defoaming agents) and "BYK-011" (manufactured by BYK-Chemie Co., Ltd., a silicon free polymer base defoaming agent).

Also, when the pigment and the resin (a) for dispersing a pigment and the other resin (b) for dispersing a pigment have a carboxyl group, the basic neutralizing agent is used in order to neutralize them to provide these resins for dispersing a pigment with water solubility or water dispersibility. Capable of being given as the specific examples thereof are, for example, inorganic bases such as ammonium hydroxide, sodium hydroxide and potassium hydroxide; and amines such as aminomethylpropanol, aminoethylpropanol, dimethylethanolamine, triethylamine, diethylethanolamine, dimethylaminopropanol and aminomethylpropanol. A blending amount of the basic neutralizing agent is an amount needed for providing the resins for dispersing a pigment with water solubility or water dispersibility, and it is suitably a proportion in which a neutralization equivalent of a carboxyl group contained in the resin for dispersing a pigment falls in a range of 0.3 to 1.5, particularly 0.4 to 1.3.

When the resin (a) for dispersing a pigment is used to disperse the pigment, the basic neutralizing agent is not preferably used. If it is used, the above basic neutralizing agent is adsorbed on the resin before the resin (a) for dispersing a pigment is adsorbed on the resin, and it is likely to inhibit the dispersibility. On the other hand, when diluted with the other resin (b) for dispersing a pigment after dispersing the pigment with the resin (a) for dispersing a pigment, neutralization is preferably carried out by the above basic neutralizing agent.

As described above, the water based ink composition can further be blended, if necessary, with additives such as a water soluble resin, a thickener, a flow controlling agent, a film forming auxiliary, a surfactant, a pH controlling agent, an antimildew agent, an antioxidant, a UV absorber, a UV stabilizer and a chelating agent, and dyes.

Capable of being used as the water soluble resin from the viewpoint of controlling the ink characteristics are, for example, polyethyleneimine, polyamines, polyvinylpyrrolidone, cellulose derivatives, polysaccharides, acryl emulsions and polyurethane emulsions. Further, a curing agent may be added as the resin component and includes, for example, amino resins and polyisocyanate compounds which may be blocked.

Melamine resins are usually used as the amino resin described above used as the curing agent. Among them, suited are methylol-reduced melamine resins and melamine resins obtained by etherifying at least a part of methylol groups contained in methylol-reduced melamine resins with monohydric alcohols having 1 to 4 carbon atoms. In particular, the resins having a water solubility or a water dispersibility are suited, but the water insoluble resins can be used as well.

Capable of being given as the commercial products of the melamine resins described above are, for example, butyl ether-reduced melamine resins such as U-van 20SE and U-van 225 (trade names, all manufactured by Mitsui Chemicals, Inc.) and Super Beckamine G840 and Super Beckamine G821 (trade names, all manufactured by Dainippon Ink & Chemicals, Inc.); methyl ether-reduced melamine resins such as Sumimal M-100, Sumimal M-40S and Sumimal M-55 (trade names, all manufactured by Sumitomo Chemical Co., Ltd.), Cymel 303, Cymel 325, Cymel 327, Cymel 350 and Cymel 370 (trade names, all manufactured by Mitsui Cytec Co., Ltd.), Nikalac MS 17 and Nikalac MS 15 (trade names, all manufactured by Sanwa Chemical Co., Ltd.) and Resimine 741 (trade name, manufactured by Monsanto Co.); methylated- and isobutylated-mixed etherified melamine resins such as Cymel 235, Cymel 202, Cymel 238, Cymel 254, Cymel 272 and Cymel 1130 (trade names, all manufactured by Mitsui Cytec Co., Ltd.) and Sumimal M66B (trade name, manufactured by Sumitomo Chemical Co., Ltd.); and methylated- and n-butylated-mixed etherified melamine resins such as Cymel XV805 (trade name, manufactured by Mitsui Cytec Co., Ltd.) and Nikalac MS95 (trade name, manufactured by Sanwa Chemical Co., Ltd.).

The polyisocyanate compound described above which may be blocked and which can be used as the curing agent includes both of a polyisocyanate compound having a free isocyanate group and a polyisocyanate compound having a blocked isocyanate group. Capable of being given as the polyisocyanate compound having a free isocyanate group are, for example, organic polyisocyanates including aliphatic diisocyanates such as hexamethylenediisocyanate and trimethylhexamethylenediisocyanate; cyclic aliphatic diisocyanates such as hydrogenated xylylenediisocyanate and isophoronediisocyanate; aromatic diisocyanates such as tolylenediisocyanate and 4,4'-diphenylmethanediisocyanate; organic polyisocyanates themselves including polyisocyanate compounds having 3 or more isocyanate groups such as triphenylmethane-4,4',4"-triisocyanate, 1,3,5-triisocyanatebenzene, 2,4,6-triisocyanatetoluene and 4,4'-dimethyldiphenylmethane-2,2',5,5'-tetraisocyanate or adducts of these respective organic polyisocyanates to polyhydric alcohols, low molecular weight polyester resins or water, or cyclized polymers of the respective organic polyisocyanates described above; and isocyanate·buret products.

The commercial products of the polyisocyanate compound having a free isocyanate group include, for example, Burnock D-750, Burnock D-800, Burnock DN-950, Burnock DN-970 and Burnock DN-15-455 (all manufactured by Dainippon Ink & Chemicals, Inc.), Desmodur L, Desmodur N, Desmodur HL and Desmodur N3390 (all manufactured by Sumitomo Bayer Urethane Co., Ltd.), Takenate D-102, Takenate D-202, Takenate D-110 and Takenate D-123N (all manufactured by Takeda Chemical Industries Ltd.), Coronate EH, Coronate L, Coronate HL and Coronate 203 (all manufactured by Nippon Polyurethane Ind. Co., Ltd.) and Duranate 24A-90CX (trade name, manufactured by Asahi Chemical Ind. Co., Ltd.).

The polyisocyanate compound having a blocked isocyanate group includes compounds obtained by blocking the isocyanate groups of the polyisocyanate compounds having a free isocyanate group described above with publicly known blocking agents such as oximes, phenols, alcohols, lactams, malonic acid diesters, acetoacetic acid esters and mercaptans. The examples of the representative commercial products thereof include Burnock D-550 (trade name, manufactured by Dainippon Ink & Chemicals, Inc.), Takenate B-815-N (trade name, manufactured by Takeda Chemical Industries Ltd.), Additol VXL-80 (trade name, manufactured by Hoechst AG., Germany), Coronate 2507 (trade name, manufactured by Nippon Polyurethane Ind. Co., Ltd.) and Desmodur N3500 (trade name, manufactured by Sumitomo Bayer Urethane Co., Ltd.). A curing catalyst may be added in using these curing agents.

Capable of being given as the UV absorber are, for example, compounds of a benzophenone base, a benzotriazole base, a cyanoacrylate base, a salicylate base and an oxalic anilide base.

The water based ink composition can be prepared by homogeneously mixing and dispersing the respective components described above by means of a disperser such as a paint shaker, a grind mill, an LMZ mill and a DCP pearl mill.

In the water based ink composition thus prepared, the dispersed particles contained therein have an average particle diameter falling preferably in a range of 1 to 300 nm, particularly 1 to 200 nm, and the ink liquid has a viscosity falling preferably in a range of 1.0 to 10 mPa·s, particularly 1.5 to 7 mPa·s.

According to the present invention, the printed layer (II) can be formed by an ink jet drawing system using the water based ink composition described above. The ink jet drawing may be carried out by any publicly known system such as a piezo ink jet system and a thermal ink jet system. Further, the printed layer (II) can be formed as well by means of, as well as a conventional ink jet drawing apparatus, a drawing apparatus loaded with a heater for controlling drying of an ink, a recoding apparatus which is loaded with an intermediate transfer mechanism and in which a record material is printed on the intermediate and then transferred onto a recoding medium such as paper and an automatic drawing apparatus which draws directly on a wall surface, an outdoor signboard and a car body.

The printed layer (II) can be formed by drawing desired patterns and characters according to the ink jet drawing system described above using usually a head having the respective dedicated nozzles of four colors of red, blue, yellow and black which are basic primary colors.

The printed layer (II) formed can be a thin film layer having a thickness falling in a range of usually about 0.01 to about 10 µm, particularly about 0.01 to about 5 µm in terms of a dried film thickness.

The printed layer (II) formed is dried to touch, semi-cured or cured by heating, if necessary, by air-drying and blowing hot air, and the clear coat layer (III) is formed thereon using a clear coating material.

### Formation of clear coat layer (III):

The clear coating material coated on the printed layer (II) is intended for protecting the printed layer (II), and organic solvent type coating materials, water based coating materials and powder coating materials can be used without having restrictions as long as they are clear coating materials having a good weatherability. A base resin component used for the above coating material includes various resins such as, for example, acryl resins, polyester resins, alkyd resins, silicon resins and fluororesins, and a cross-linking agent such as a polyisocyanate compound, an amino resin, an epoxy group-containing compound and a carboxyl group-containing compound can be used, if necessary, in combination therewith. These coating materials may be either a cold setting type or a thermosetting type or may be a type which is cured with an active ray such as a UV ray and an electron beam. Among them, suited are clear coating materials of a urethane curing type comprising a combination of polyacrylpolyol or polyesterpolyol and a polyisocyanate compound which may be blocked as a resin component and coating materials of a UV ray curing type comprising a UV ray curable acryl resin as a base resin. The clear coating material contains preferably a UV absorber and/or a UV stabilizer in terms of a weatherability. The compounds listed in the explanation of the water based ink composition described above can be used as the above UV absorber and UV stabilizer. A blending amount thereof can fall in arrange of 0.1 to 5 parts by weight per 100 parts by weight of the resin solid matter contained in the coating material.

The clear coating material described above can be coated by a conventionally known method, for example, an air spray, airless spray and an electrostatic rotary atomizing type coating method. Usually, the clear coat layer (III) can have a thickness falling in a range of about 10 to about 50 µm, preferably about 20 to about 45 µm in terms of a dried film thickness.

### Examples

The present invention shall more specifically be explained below with reference to production examples, examples and comparative examples. "Part" and "%" each mean "part by weight" and "% by weight" unless other wise described.

### Production of resin (a) for dispersing a pigment

### Production Example 1

A conventional acryl resin reaction bath equipped with a stirrer, a thermometer and reflux condenser was charged with 38 parts of ethylene glycol monobutyl ether and 12 parts of isobutyl alcohol and maintained at 110°C by heating while stirring. Dropwise added thereto in 3 hours was a mixture comprising 48.5 parts of methyl methacrylate, 20 parts of n-butyl acrylate, 5 parts of 2-(methacryloyloxy)ethyltrimethylammonium chloride, 1.5 part of 2-(2'-hydroxy-5'-methacryloyloxyethylphenyl)-2H-benzotriazole, 5 parts of 2-hydroxyethyl acrylate, 40 parts of "NF Bisomer S20W (trade name, 50 % water-diluted product of methoxypolyethylene glycol monomethaerylate, molecular weight: about 2080, manufactured by Dai-ichi Kogyo Seiyaku Co., Ltd.), 1 part of azobisisobutyronitrile and 20 parts of isobutyl alcohol. After finishing dropwise adding, the mixture was ripened at 110°C for 30 minutes, and then dropwise added thereto in one hour was an additional catalyst mixed solution comprising 10 parts of ethylene glycol monobutyl ether and 0.5 part of azobisisobutyronitrile. Subsequently, the solution was ripened at 110°C for one hour and then cooled down to obtain a resin (a-1) for dispersing a pigment having a solid content of 50 %.

### Production Examples 2 and 3

The same operation as in Production Example 1 was carried out to obtain resins (a-2) and (a-3) for dispersing a pigment, except that in Production Example 1, the composition was changed to those shown in Table 1 described later. Shown in the following Table 1 are the solid matters of these resin solutions for dispersing a pigment and the resin acid values of the resins for dispersing a pigment. In Table 1, the amount of "NF Bisomer S20W" shows a solid matter amount.

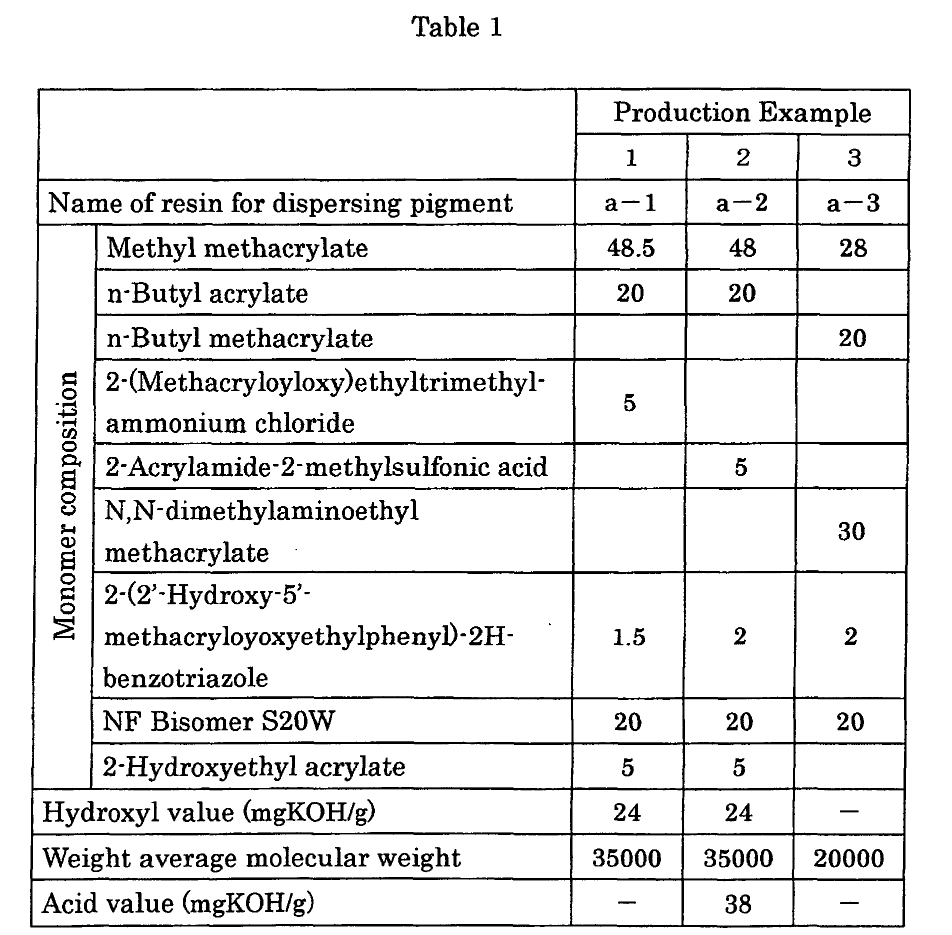

### Preparation of water based ink

A wide-mouthed glass bottle having a capacity of 225 cc was charged with the respective resin solutions for dispersing a pigment having a solid content of 50 % obtained in Production Examples 1 to 3 described above, the pigment, "BYK-028" (trade name, silicon base defoaming agent, manufactured by BYK-Chemie Co., Ltd.), isopropanol, glycerin and deionized water in a blend composition shown in Table 2 described later. Glass beads having a diameter of about 1.3 mmφ as a dispersing medium were put thereinto, and the mixture was dispersed for 4 hours by means of a paint shaker to obtain the respective water based inks ① to ④.

**Table 2**

| | | | | | | |
|---|---|---|---|---|---|---|
| Water based ink name | | | ① | ② | ③ | ④ |
| Resin solution for dispersing pigment | | Kind | a-1 | a-2 | a-2 | a-3 |
| | | Amount | 5 | 5 | 5 | 5 |
| Pigment | Pigment Blue15:3 | | 5 | | | |
| | Pigment Red122 | | | 5 | | |
| | Pigment Yellow74 | | | | 5 | |
| | Pigment Black7 | | | | | 5 |
| BYK-028 | | | 0.6 | 0.6 | 0.6 | 0.6 |
| Isopropanol | | | 10 | 10 | 10 | 10 |
| Glycerin | | | 7.5 | 7.5 | 7.5 | 7.5 |
| Deionized water | | | 71.9 | 71.9 | 71.9 | 71.9 |

Water based inks of the respective blue, red, yellow and black colors of commercially available "BCI-31e" (inks for ink jet, manufactured by Canon Inc.) were used as water based inks ⑤ to ⑧.

### Preparation of white color base coating material

"Carplex BS-304N" (silica fine particles, oil absorption: 171 ml/100 g, manufactured by Shionogi & Co., Ltd.) was used to prepare a toluene dispersion having a solid content of 25 %, and this was blended with a two liquid type acryl urethane base organic solvent type coating material "Retan PG2K White" (pigment volume concentration: 23.6 %, manufactured by Kansai Paint Co., Ltd.) so that the pigment volume concentration was 35 % to obtain a white color base coating material (I-1).

Further, a two liquid type acryl urethane base coating material "Retan PG2K White" itself which was not blended with "Carplex BS-304" was used as a white color base coating material (I-2) for the sake of comparison.

### Example 1

The white color base coating material (I-1) described above was coated on a polyester film surface by means of an air spray so that the thickness in terms of a dried film thickness became 20 µm, and it was dried at 60°C for 20 minutes by blowing air to form a white color base coating film layer. Then, printing was carried out thereon by means of an ink jet drawing apparatus "BJF660V" (manufactured by Canon Inc.) using the water based inks of ① to ④ to form a printed layer. The printed layer was dried at a room temperature for 10 minutes, and then a two liquid type acryl urethane base organic solvent type clear coating material "Retan PG2K Clear" (containing a UV absorber, manufactured by Kansai Paint Co., Ltd.) was coated on the printed layer by means of an air spray so that the thickness in terms of a dried film thickness became 30 to 40 µm. It was dried at 60°C for 20 minutes to obtain an ink jet printed matter.

### Example 2

The same operation as in Example 1 was carried out to obtain an ink jet printed matter, except that in Example 1, the water based inks used for forming the printed layer were changed to the water based inks ⑤ to ⑧.

### Comparative Example 1

The same operation as in Example 1 was carried out to obtain an ink jet printed matter, except that in Example 1, the white color base coating material (I-2) was substituted for the white color base coating material (I-1) used for forming the white color base coating film layer.

### Comparative Example 2

The same operation as in Example 1 was carried out to obtain an ink jet printed matter, except that in Comparative Example 1, the water based inks used for forming the printed layer were changed to the water based inks ⑤ to ⑧.

Printing aptitude and durability tests were carried out for the ink jet printed matters obtained in the respective examples and comparative example described above according to the following methods to evaluate them. The results thereof are shown in Table 3.
(*1) Printing aptitude: the print state (the form of dots) of the respective ink jet printed matters before clear coating was observed under a microscope. The print state in which feathering of the ink was not observed and the print density was high was marked with ○, and the print state in which feathering of the ink was caused or the ink was not fixed was marked with ×. Also, in respect to the blue, red, and yellow ink colors, the vividness of the print surface was evaluated by the value of the saturation. On the other hand, the black ink color was evaluated by an L* value in the value of a lightness. The colors were measured by means of "CR200" (manufactured by Minolta Co., Ltd.). In respect to the blue, red, and yellow inks, it is shown that the larger the value is, the more vivid the colors are. In respect to the black ink, it is shown that the smaller the value is, the higher the print density is.
(*2) Durability test: the water resistance was evaluated as the durability test. The respective ink jet printed matters were dipped in deionized water at a room temperature for 24 hours to visually evaluate a feathering state on the print surface. The good state in which feathering of the ink was not observed was marked with ○, and the state in which feathering was caused and an image on the print surface was broken was marked with ×.

**Table 3**

| | | Example | | Comparative Example | |
|---|---|---|---|---|---|
| | | 1 | 2 | 1 | 2 |
| Print state | Blue | ○ | ○ | × | × |
| | Red | ○ | ○ | × | × |
| | Yellow | ○ | ○ | × | × |
| | Black | ○ | ○ | × | × |
| Saturation | Blue | 28.2 | 34.8 | 8.5 | 9.3 |
| | Red | 45.8 | 52.9 | 14.1 | 15.8 |
| | Yellow | 52.1 | 59.9 | 19.5 | 20.9 |
| L* value | Black | 38.6 | 40.9 | 41.0 | 43.5 |
| Durability test | | ○ | ○ | × | × |

### Example 3

An epoxy resin base cationically electrodepositable coating material was electrodepositably coated on a cold rolled dull steel plate having a thickness of 0.8 mm subjected to zinc phosphate chemical conversion treatment so that the dried film thickness became about 20 µm, and it was baked to obtain an electrodepositably coating film. A polyester resin base intermediate coating material for an automobile was coated on the electrodepositably coating film so that the dried film thickness became about 20 µm, and it was baked. This coated plate was wet-grinded with a sand paper of #400, drained, dried and degreased by petroleum benzene. Then, the white color base coating material (I-1) described above was coated on this degreased plate by means of an air spray so that the dried film thickness became about 20 µm, and it was dried for 20 minutes by blowing air of 60°C to form a white color base coating film layer. Then, coating and printing were carried out thereon at a booth humidity of 70 % by means of an automatic coating machine "Michelangelo V7" (manufactured by LAC Co., Ltd.) by an ink jet system using the respective water based inks ① to ④ described above to form a printed layer. The printed layer was dried at a room temperature for 10 minutes, and then a two liquid type acryl urethane base organic solvent type coating material "Retan PG2K Clear" (containing a UV absorber, manufactured by Kansai Paint Co., Ltd.) was coated on the printed layer by means of an air spray so that the thickness in terms of a dried film thickness became 30 to 40 µm. It was dried at 60°C for 20 minutes to obtain an ink jet printed matter.

This was subjected to a 600 hour test by means of a xenon weather meter, and ΔE of the coated plate after the test was measured by means of a "color view spectrocolorimeter" (manufactured by BYK-Chemie Co., Ltd.) to evaluate the weatherability. The result thereof shows that all the ΔE values in the respective colors are as small as 1.5 for blue, 2.0 for red, 3.0 for yellow and 0.2 for black, and it has been found that the weatherability is good.

### Industrial Applicability

In the present invention, the specific white color base coating material is used to form a base coating film layer, and then a printed layer is formed thereon using a water-based ink composition by an ink jet system. Further, a clear coating material is used to form a clear coat layer. The formation of the base coating film layer prevents the ink from causing feathering and improves a fixing state of the ink. In addition thereto, not only the print density by the above water-based ink composition is elevated to make it possible to form the printed layer which is excellent in a color developing property and a finish appearance, but also an ink jet printed matter which is excellent as well in a weatherability is obtained by providing a clear layer. The above ink jet printed matter is suited to outdoor uses such as building wall surfaces, outdoor signboards, traffic signs and car bodies.

## Claims

1. A method for producing an ink jet printed matter, **characterized by** forming a white color base coating film layer (I) on a base material surface using a white color base coating material which contains silica fine particles having an oil absorption of 10 to 400 ml/100 g and which has a pigment volume concentration of 5 to 90 %, then forming a printed layer (II) thereon by an ink jet system using a water based ink composition and further forming a clear coat layer (III) thereon using a clear coating material.

2. The method as described in claim 1, wherein the white color base coating material contains the silica fine particles having an oil absorption of 150 to 350 ml/100 g.

3. The method as described in claim 1, wherein the silica fine particles have an average particle diameter of 100 to 10,000 nm.

4. The method as described in claim 1, wherein the white color base coating material contains the silica fine particles in a proportion of 3 to 40 % by weight based on the total weight of the whole pigments.

5. The method as described in claim 1, wherein the white color base coating material has a pigment volume concentration of 10 to 55%.

6. The method as described in claim 1, wherein the white color base coating material is a coating material of a urethane curing type comprising polyacrylpolyol or polyesterpolyol and a polyisocyanate compound which may be blocked as a resin component or a coating material of a UV ray setting type comprising a UV ray setting acryl resin as a resin component.

7. The method as described in claim 1, wherein the white color base coating film layer (I) has a thickness (in terms of a dried film thickness) of about 5 to about 50 µm.

8. The method as described in claim 1, wherein the water based ink composition comprises a resin for dispersing a pigment which is a copolymer of a polymerizable unsaturated monomer (A) having at least one ionic functional group selected from a tertiary amino group, a quaternary ammonium group and a sulfonic acid group, a nonionic polymerizable unsaturated monomer (B) having a polyoxyalkylene chain and the other ethylenically unsaturated monomer (C), a pigment and a water based medium.

9. The method as described in claim 1, wherein the resin for dispersing a pigment is formed using a UV ray-absorbing polymerizable unsaturated monomer and/or a UV ray-stabilizing polymerizable unsaturated monomer (D) as at least a part of the monomer (C).

10. The method as described in claim 1, wherein the printed layer (II) is formed according to an ink jet drawing system using a head having the respective dedicated nozzles for the water based ink compositions of four colors of red, blue, yellow and black.

11. The method as described in claim 1, wherein the printed layer (II) has a thickness (in terms of a dried film thickness) of about 0.01 to about 10 µm.

12. The method as described in claim 1, wherein the clear coating material contains a UV absorber and/or a UV stabilizer.

13. The method as described in claim 1, wherein the clear coat layer has a thickness (in terms of a dried film thickness) of about 10 to about 50 µm.

14. An ink jet printed matter produced by the method as described in any of claims 1 to 13.
